# FASCICULE DE BREVET EUROPEEN

(11) **EP 4 186 466 B1**
(45) Date de publication et mention de la délivrance du brevet: **19.02.2025**
(21) Numéro de dépôt: 22206424.8
(22) Date de dépôt: 09.11.2022
(51) Int. Cl.: A61C 13/00, A61C 13/30

(54) **PRÉFORME DENTAIRE, PROCÉDÉ DE FABRICATION D'UNE TELLE PRÉFORME ET PROCÉDÉ DE FABRICATION D'UNE PROTHÈSE DENTAIRE À PARTIR D'UNE TELLE PRÉFORME**
DENTALVORFORM, VERFAHREN ZUR HERSTELLUNG EINER SOLCHEN VORFORM UND VERFAHREN ZUR HERSTELLUNG EINER ZAHNPROTHESE AUS EINER SOLCHEN VORFORM
DENTAL PREFORM, METHOD FOR MANUFACTURING SUCH A PREFORM AND METHOD FOR MANUFACTURING A DENTAL PROSTHESIS FROM SUCH A PREFORM

(30) Priorité: 24.11.2021 FR 2112475
(43) Date de publication de la demande: 31.05.2023
(73) Titulaire: Clunet-Coste, Bruno, 38960 Saint-Etienne-de-Crossey (FR); Maneuf, Bernard, 38500 Voiron (FR); Collombin, André, 38500 Voiron (FR)
(72) Inventeur: Clunet-Coste, Bruno, 38960 Saint-Etienne-de-Crossey (FR); Maneuf, Bernard, 38500 Voiron (FR); Collombin, André, 38500 Voiron (FR)
(74) Mandataire: Talbot, Alexandre

(56) Documents cités:
- EP-A2- 1 147 748
- WO-A1-96/26687
- DE-A1- 3 825 601
- US-A1- 2002 123 023

## Description

### Domaine technique

L'invention concerne une préforme dentaire, un procédé de fabrication d'une telle préforme dentaire et un procédé de fabrication d'une prothèse dentaire à partir d'une telle préforme dentaire.

### État de la technique

Il est connu de former au moins une partie d'une prothèse dentaire à partir d'une préforme dentaire qui est usinée. La préforme dentaire est usinée par tout moyen adapté et préférentiellement en technologie CAD-CAM. Différents types de préformes dentaires sont commercialisés avec des caractéristiques mécaniques sensiblement homogènes d'une extrémité à l'autre de la préforme.

Cependant, il convient de souligner que les performances mécaniques de telles préformes sont très éloignées de celles d'une dent naturelle ce qui pose des problèmes d'adaptation lorsqu'une prothèse dentaire est installée. On peut observer que les matériaux composites actuels, notamment les composites à particules, ne sont pas adaptés pour reproduire le fonctionnement d'une dent naturelle. Il en est de même pour les préformes en céramique, par exemple les préformes en disilicate de lithium ou en zircone. Cette problématique est également présente pour les céramiques hybrides qui sont des matériaux composites possédant un réseau principal et un réseau secondaire. Le réseau principal en céramique est infiltré par un réseau secondaire qui est en polymère. Les deux réseaux sont totalement imbriqués l'un dans l'autre. La structure à double réseau céramique-polymère, a été conçue pour conjuguer idéalement les bonnes propriétés de la céramique et des matériaux composites. Cependant, le réseau principal en céramique reste rigide et cassant. Il est également peu déformable ce qui ne lui permet pas reproduire les performances mécaniques d'une dent naturelle. La ténacité de ce matériau hybride est considérée comme faible ce qui limite son intérêt.

Il est encore possible de former une préforme dentaire sur-mesure dont les performances mécaniques ont été adaptées aux contraintes dimensionnelles de la dent à remplacer. Cependant, cette opération est longue et relativement onéreuse.

Le document WO96/26687 divulgue un tenon dentaire réalisé en matériau composite avec une âme centrale formée par un faisceau de fibres. L'âme centrale est entourée par une gaine constituée d'au moins une couche de fibres. L'âme centrale et la gaine sont noyées dans une résine durcissable. Les fibres de la gaine sont orientées d'un angle donné par rapport aux fibres de l'âme centrale pour ajuster les valeurs de résistance à la traction longitudinale et transversale du tenon.

Le document DE3825601 divulgue un tenon dentaire possédant une partie radiculaire formée par des fibres parallèles et une partie coronaire formée par des fibres dirigées obliquement. Les fibres dirigées obliquement sont dirigées de manières opposées et avec le même angle par rapport aux fibres de la partie radiculaire. Le document EP 1147748 divulgue un tenon dentaire qui possède une partie centrale en matériau composite autour de laquelle des couches de tissu en fibre de carbone sont enroulées. Les couches de tissu sont noyées dans une résine époxy. Les couches de tissu sont disposées de manière concentrique autour de la partie centrale. Le document US2002/0123023 divulgue un tenon dentaire formé par une pluralité de fibres de verre qui sont tordues ensemble et noyées dans une résine afin de former une structure monobloc déformable. Le tenon peut être terminé par une entretoise destinée à recevoir une couronne.

Il existe donc un besoin pour former une préforme dentaire qui correspond mieux aux caractéristiques mécaniques d'une dent tout en étant facile à réaliser.

### Exposé de l'invention

Un objet de l'invention consiste à pallier ces inconvénients, et plus particulièrement à fournir une préforme dentaire qui possède un gradient de module d'élasticité entre sa portion centrale et sa portion périphérique afin de mieux reproduire les caractéristiques mécaniques d'une dent naturelle.

On tend à résoudre ces inconvénients au moyen d'une préforme dentaire telle que définie dans la revendication 1, comprenant :
- une portion centrale formée par une pluralité de premiers éléments filaires et une première résine, les premiers éléments filaires s'étendant majoritairement selon une première direction, la première résine liant mécaniquement les premiers éléments filaires entre eux ;
- une portion périphérique se présentant sous la forme d'un anneau autour de la portion centrale perpendiculairement à la première direction, la portion périphérique comportant des deuxième éléments filaires et une deuxième résine, la deuxième résine liant mécaniquement les deuxièmes éléments filaires entre eux, les premiers éléments filaires et les deuxièmes éléments filaires étant liés mécaniquement entre eux au moins par la première résine et la deuxième résine ;
préforme dentaire
dans laquelle la portion périphérique comporte une pluralité de couches disposées les unes sur les autres perpendiculairement à la première direction, les couches faisant le tour de la portion centrale ;
dans laquelle chaque couche possède au moins une spire formée par au moins un des deuxièmes éléments filaires, le au moins un deuxième élément filaire présentant une direction longitudinale qui est décalée par rapport à la première direction d'un angle compris entre 10° et 80° ou entre 100° et 170° ;
dans laquelle les deuxièmes éléments filaires de deux couches consécutives présentent des orientations opposées ;
et dans laquelle les deuxièmes éléments filaires de chaque couche n'appartiennent pas à un tissu ou à un élément tissé ;
dans laquelle au moins plusieurs couches de la pluralité de couches possèdent, en outre, une nappe choisie parmi un tissu, un élément tissé, un ruban, une tresse, la nappe étant située sous ou au-dessus des deuxièmes éléments filaires dans lesdites plusieurs couches ;
dans laquelle la nappe s'étend d'une extrémité à l'autre de la préforme dentaire selon la première direction et s'étend sur toutes les couches, la nappe se présentant sous la forme d'une spirale dans un plan de coupe perpendiculaire à la première direction, avec une alternance entre une épaisseur de nappe et une épaisseur de deuxième élément filaire selon une direction d'observation perpendiculaire à la première direction et dirigée depuis la portion centrale jusqu'à une extrémité de la portion périphérique.

Selon un aspect de l'invention, la portion centrale possède des éléments filaires qui sont, majoritairement en volume, les premiers éléments filaires.

De manière préférentielle, la portion centrale comporte exclusivement les premiers éléments filaires et la première résine.

Dans un mode de réalisation particulier, la portion périphérique possède un gradient de module d'élasticité croissant en s'éloignant de la portion centrale perpendiculairement à la première direction.

Avantageusement, la portion périphérique présente une teneur en deuxième élément filaire qui est croissante de manière monotone en s'éloignant de la portion centrale perpendiculairement à la première direction pour former le gradient de module d'élasticité.

Dans un mode de réalisation particulier, la deuxième résine est dopée avec des particules. La portion périphérique présente un rapport de la teneur en deuxième élément filaire sur la teneur en particules qui est croissant selon la direction radiale en s'éloignant de la portion centrale perpendiculairement à la première direction pour former le gradient de module d'élasticité.

Préférentiellement, le rapport de la teneur en deuxième élément filaire sur la teneur en particules est croissant de manière inversement proportionnelle à la distance à la portion centrale pour former le gradient de module d'élasticité.

De manière préférentielle, une pluralité de tubes concentriques sont formés par la nappe de la pluralité de couches depuis l'interface avec la portion centrale jusqu'à la paroi externe de la portion périphérique.

Dans un mode de réalisation privilégié, chaque couche comporte plusieurs deuxièmes éléments filaires bobinés en spires autour de la portion centrale.

L'invention a également pour objet un procédé de fabrication qui permet de former facilement une préforme dont les performances mécaniques sont mieux maitrisées. On tend à résoudre ce problème au moyen d'un procédé de fabrication d'une préforme dentaire selon la revendication 7 qui comporte les étapes suivantes :
- fournir un mandrin s'étendant selon une première direction ;
- former une portion périphérique sous la forme d'un anneau autour du mandrin perpendiculairement à la première direction, la portion périphérique possédant une pluralité de couches faisant le tour du mandrin, les couches étant disposées les unes autour des autres perpendiculairement à la première direction, chaque couche comportant au moins un deuxième élément filaire et une deuxième résine, la deuxième résine liant mécaniquement les deuxièmes éléments filaires entre eux dans la portion périphérique ; procédé de fabrication dans lequel le au moins un deuxième élément filaire de chaque couche présente une direction longitudinale qui est décalée par rapport à la première direction d'un angle compris entre 10° et 80° ou entre 100° et 170° ; dans lequel les au moins un deuxième élément filaire de deux couches consécutives présentent des orientations opposées ; dans lequel le au moins un deuxième élément filaire de chaque couche n'appartient pas à un tissu ou à un élément tissé ; dans lequel le mandrin est une portion centrale formée par une pluralité de premiers éléments filaires et une première résine, les premiers éléments filaires s'étendant majoritairement selon la première direction, la première résine liant mécaniquement les premiers éléments filaires entre eux, les premiers éléments filaires et les deuxièmes éléments filaires étant liés entre eux au moins par la première résine et la deuxième résine, ou dans lequel le mandrin est retiré pour définir une zone vide dans la portion périphérique, la zone vide étant remplie par une pluralité de premiers éléments filaires et une première résine, les premiers éléments filaires s'étendant majoritairement selon la première direction, les premiers éléments filaires et les deuxièmes éléments filaires étant liés entre eux au moins par la première résine et la deuxième résine ; dans lequel au moins plusieurs couches de la pluralité de couches possèdent, en outre, une nappe choisie parmi un tissu, un élément tissé, un ruban, une tresse, la nappe étant située sous ou au-dessus des deuxièmes éléments filaires dans lesdites plusieurs couches ; dans lequel la nappe s'étend d'une extrémité à l'autre de la préforme dentaire selon la première direction et s'étend sur toutes les couches, la nappe se présentant sous la forme d'une spirale dans un plan de coupe perpendiculaire à la première direction, avec une alternance entre une épaisseur de nappe et une épaisseur de deuxième élément filaire selon une direction d'observation perpendiculaire à la première direction et dirigée depuis la portion centrale jusqu'à une extrémité de la portion périphérique.

Avantageusement, deux couches successives partagent le au moins un deuxième élément filaire. Les spires sont formées par un bobinage en nid d'abeille, et préférentiellement le au moins un deuxième élément filaire s'étend continument sur toutes les couches de la portion périphérique.

De manière préférentielle, chaque couche comporte, en outre, une nappe formée par un tissu ou un élément tissé dont le fil de trame ou de quasi-trame s'étend selon la première direction.

Dans un mode de réalisation privilégié, le procédé comporte au moins une découpe d'un ensemble formé par la portion centrale et la portion périphérique perpendiculairement à la première direction pour définir la dimension de la préforme dentaire selon la première direction.

L'invention a également pour objet un procédé de fabrication d'une prothèse dentaire dont les performances mécaniques sont mieux maitrisées. On tend à résoudre ce problème au moyen d'un procédé de fabrication d'une prothèse dentaire comportant les étapes suivantes :
- une fourniture d'une préforme dentaire de l'invention selon l'une quelconque des configurations précédentes ;
- un usinage de la préforme dentaire dans lequel une partie de la portion périphérique est complètement éliminée pour atteindre la portion centrale destinée à former un ancrage canalaire, et une autre partie de la portion périphérique est partiellement éliminée pour former une portion coronaire de la prothèse dentaire selon une forme prédéfinie.

Préférentiellement, le procédé comporte avant l'usinage, une découpe de la préforme dentaire perpendiculairement à la première direction pour définir la dimension de la préforme dentaire selon la première direction.

### Description des dessins

D'autres avantages et caractéristiques ressortiront plus clairement de la description qui va suivre de modes particuliers de réalisation et de mise en œuvre de l'invention donnés à titre d'exemples non limitatifs et représentés aux dessins annexés, dans lesquels :
- la figure 1 illustre schématiquement une vue en perspective d'une préforme dentaire ;
- la figure 2 illustre schématiquement une vue en perspective d'une préforme dentaire montée sur un préhenseur ;
- la figure 3, illustre schématiquement une autre vue en perspective d'une préforme dentaire montée sur un préhenseur selon un autre mode de réalisation ;
- la figure 4 illustre schématiquement une vue plus détaillée de la portion centrale d'une préforme dentaire ;
- la figure 5 illustre schématiquement une étape de bobinage du deuxième élément filaire pour former la portion périphérique de la préforme dentaire ;
- la figure 6 illustre schématiquement une vue en coupe d'une préforme dentaire ;
- la figure 7 illustre schématiquement une vue d'un dispositif de fabrication d'une préforme dentaire.

### Description détaillée

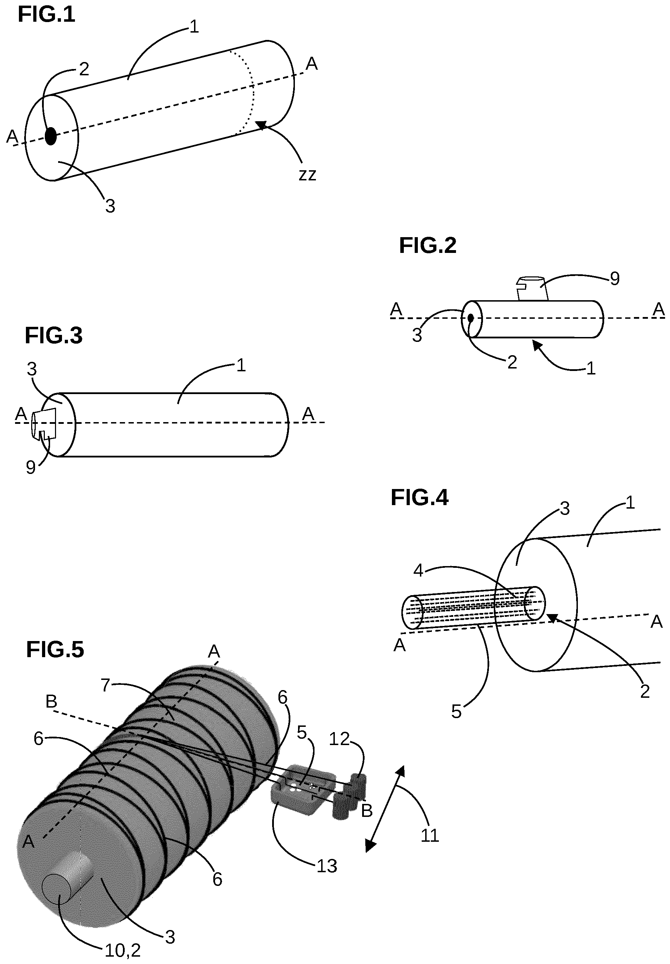

Les figures 1, 2 et 3 représentent une préforme dentaire 1. La préforme dentaire 1 possède une portion centrale 2 et une portion périphérique 3. La préforme dentaire 1 peut être une préforme dentaire à usiner ou une préforme générique qui sera découpée pour former les préformes dentaires qui seront à usiner. La préforme est réalisée en matériau composite avec au moins une résine et au moins un élément filaire.
La figure 4 illustre une vue plus détaillée de la préforme dentaire 1 et notamment la portion centrale 2. La portion centrale 2 possède une pluralité de premiers éléments filaires 4 et une première résine 5. Les premiers éléments filaires 4 s'étendent majoritairement selon une première direction AA. La première résine 5 lie mécaniquement les premiers éléments filaires 4 entre eux.

Les premier éléments filaires 4 possèdent des premiers éléments filaires 4 orientés principalement selon la première direction AA, préférentiellement parallèlement entre eux. Préférentiellement, les premiers éléments filaires 4 s'étendent continument d'une extrémité à l'autre de la préforme selon la première direction AA pour faciliter la transmission des efforts sur la hauteur de la portion centrale 2. Les premier éléments filaires 4 peuvent comporter des fils unidirectionnels, des éléments tissés, du tissu, un ruban, une tresse. Il est également possible de combiner plusieurs de ces éléments par exemple des fils et des tresses. Un élément tissé, un tissu, un ruban ou une tresse peut être formé par plusieurs fils ou fibres.

Les fils peuvent être des fils en silice, en matériau organique. De préférence, les fils sont réalisés dans un matériau choisi parmi le polyéthylène, le polyétheréthercétone PEEK et le carbone. Il peut en être de même pour les fibres. De manière préférentielle, les premiers éléments filaires 4 s'étendent continument sur toute la hauteur de la préforme dentaire 1, c'est-à-dire selon la première direction AA.

De manière privilégiée, la première résine 5 est une résine polymère qui est avantageusement chargée par des particules, de préférence des micro-particules et/ou des nano-particules. Les fils, fibres, tissus, rubans, tresses et autres éléments formant les premiers éléments filaires 4 peuvent être recouverts d'une résine d'imprégnation. La résine d'imprégnation peut être identique ou différente de la première résine 5. La résine d'imprégnation et la première résine 5 sont chimiquement compatibles pour assurer la liaison mécanique entre les premier éléments filaires 4. Les résines sont préférentiellement des résines thermodurcissables.

La portion centrale 2 peut avoir une forme quelconque dans son plan de coupe perpendiculaire à la première direction AA. De préférence, la portion centrale 2 présente une section circulaire.

La portion centrale 2 possède plusieurs premiers éléments filaires 4 qui présentent un module d'élasticité supérieur au module d'élasticité de la première résine 5 selon la première direction AA. La portion centrale 2 peut également présenter un élément filaire additionnel qui possède une dureté inférieure à la dureté des premiers éléments filaires 4 et de la première résine 5 de manière à définir une zone de gravure privilégiée et ainsi faciliter une intervention jusqu'à un apex infecté.

Il est avantageux que la portion centrale 2 comporte une majorité volumique de premiers éléments filaires 4 par rapport à tout autre élément filaire pour mieux canaliser les efforts. Il est avantageux que la portion centrale 2 comporte exclusivement les premiers éléments filaires 4 et la première résine 5. Les efforts appliqués dans la portion centrale 2 sont mieux canalisés.

La portion périphérique 3 entoure complètement la portion centrale 2 perpendiculairement à la première direction AA. La portion périphérique 3 forme un anneau dont la partie interne est remplie par la portion centrale 2.

La portion périphérique 3 comporte des deuxième éléments filaires 6 et une deuxième résine 7. La deuxième résine 7 lie mécaniquement les deuxièmes éléments filaires 6 entre eux. La première résine 5 et la deuxième résine 7 lient mécaniquement les premiers éléments filaires 4 avec les deuxièmes éléments filaires 6.

La portion périphérique 3 comporte une pluralité de couches disposées les unes sur les autres perpendiculairement à la première direction AA depuis la portion centrale 2 et de préférence jusqu'à la paroi externe de la préforme dentaire 1. Les couches font le tour de la portion centrale 2. Les couches comportent une ou plusieurs spirales d'au moins un deuxième élément filaire 6 et de la deuxième résine 7 autour de la portion centrale 2. Le au moins un deuxième élément filaire 6 forme au moins un tour complet autour de la portion centrale 2 dans une observation selon la première direction AA. Dans un mode de réalisation privilégié, un deuxième élément filaire 6 s'étend continument d'une extrémité à l'autre de la préforme dentaire 1 selon la première direction AA sous la forme d'une spirale réalisant plusieurs tours entiers autour de la portion centrale 2. Avantageusement, un deuxième élément filaire 6 réalise au moins deux tours entiers autour de la portion centrale 2. Préférentiellement, le deuxième élément filaire 1 présente un pas de bobinage constant ou sensiblement constant sur la hauteur de la préforme dentaire 1, c'est-à-dire selon la première direction AA.

Le ou les deuxièmes éléments filaires 6 de chaque couche présentent une direction longitudinale qui est décalée par rapport à la première direction AA d'un angle compris entre 10° et 80° ou entre 100° et 170°. Lorsqu'un deuxième élément filaire 6 fait le tour complet de la portion centrale 2, il se décale dans un sens ou dans un autre selon la première direction AA. Dans le mode de réalisation illustré à la figure 5, l'angle réalisé entre la direction longitudinale du deuxième élément filaire 6 en cours de bobinage (axe BB) et la première direction AA est compris entre 10° et 80°. Dans cette configuration, à chaque tour autour de la portion centrale 2, le deuxième élément filaire 6 se décale vers la droite. Dans la couche suivante et dans la couche précédente, l'angle réalisé entre la direction longitudinale du deuxième élément filaire 6 en cours de bobinage et la première direction AA est compris entre 100° et 170°, cela correspond à un deuxième élément filaire 6 dont l'axe longitudinal présente une direction opposée à celle de la couche précédente. A chaque tour de la portion centrale 2, le deuxième élément filaire 6 se décale vers la gauche. Le sens de bobinage est opposé entre deux couches consécutives. L'utilisation de deuxièmes éléments filaires 6 de deux couches consécutives avec des orientations opposées permet aux deuxièmes éléments filaires 6 de deux couches consécutives de définir un maillage lors d'une observation perpendiculaire à la première direction AA.

Dans chaque couche, il existe au moins un deuxième élément filaire 6, par exemple un fil, une fibre, un ruban, une tresse qui s'étend d'une extrémité à l'autre de la préforme dentaire 1 selon la première direction AA, dans la portion périphérique. Le au moins un deuxième élément filaire 6 forme une pluralité de spires autour de la portion centrale 2. Selon les couches, les spires tournent dans des sens opposés autour de la première direction AA. De manière préférentielle, dans chaque couche, les deuxièmes éléments filaires 6 s'étendent continument d'une extrémité à l'autre de la préforme dentaire 1 selon la première direction AA en formant des spires autour de la portion centrale 2.

Il est avantageux que les deuxièmes éléments filaires 6 forment au moins cinq tours autour de la portion centrale 2.

Le ou les deuxièmes éléments filaires 6 de chaque couche n'appartiennent pas à un tissu ou à un élément tissé. Le ou les deuxièmes éléments filaires 6 de chaque couche définissent uniquement une spirale autour de la portion centrale 2. De manière préférentielle, les deuxièmes éléments filaires 6 sont uniquement reliés par de la résine selon la première direction AA. Il n'y a pas de fil de trame ou de quasi fil de trame comme dans un élément tissé pour les relier entre eux.

Les deuxièmes éléments filaires 6 sont bobinés pour former une pluralité de spires autour de la portion centrale 2. La pluralité de spires se présente sous la forme d'un empilement de spires autour de la portion centrale 2. L'empilement de spires comporte plusieurs couches de spires disposées les unes sur les autres selon une direction radiale perpendiculaire à la première direction AA.

Les deuxièmes éléments filaires 6 définissent une pluralité de trous qui s'étendent jusqu'à la portion centrale 2 selon une direction perpendiculaire à la première direction AA. Les trous sont remplis par la deuxième résine 7. Les trous sont définis par les multiples couches de spires qui se superposent et ils se présentent préférentiellement sous la forme de losanges lors d'une observation perpendiculairement à la première direction AA.

Les deuxièmes éléments filaires 6 peuvent comporter un fil unidirectionnel, un élément tissé, du tissu, un ruban, une tresse. Le fil peut être un fil en silice, en matériau organique. De préférence, le fil est réalisé dans un matériau choisi parmi le polyéthylène, le polyétheréthercétone (PEEK) et le carbone. Les deuxièmes éléments filaires 6 peuvent avoir une composition chimique identique à celle des premiers éléments filaires 4 ou alors une composition chimique différente de ces derniers.

De manière privilégiée, la deuxième résine 7 est une résine polymère qui est chargée par des particules 7a, de préférence des micro-particules et/ou des nano-particules. Les fils, fibres, tissus, rubans, tresses et aux éléments formant les deuxièmes éléments filaires peuvent être recouverts d'une deuxième résine d'imprégnation. La deuxième résine d'imprégnation peut être identique ou différente de la deuxième résine 7. La deuxième résine d'imprégnation et la deuxième résine 7 sont chimiquement compatibles pour assurer la liaison mécanique entre les deuxièmes éléments filaires 6. Les résines sont préférentiellement des résines thermodurcissables.

La formation de plusieurs couches annulaires disposées les unes autour des autres et reliées mécaniquement entre elles par la deuxième résine 7 permet de moduler efficacement les performances mécaniques de manière radiale ou sensiblement radiale perpendiculairement à la première direction AA. L'épaisseur d'un deuxième élément filaire étant faible, il est possible de réaliser un nombre important de tours autour de la portion centrale 2 pour former la portion périphérique 3 tout en restant dans les dimensions latérales d'une dent à réparer. **Il** est donc possible de réaliser facilement une préforme dentaire 1 dont les performances mécaniques sont maitrisées radialement, c'est-à-dire en fonction de son éloignement par rapport à la portion centrale 2.

La modulation des caractéristiques de bobinage dans chaque couche depuis l'interface avec la portion centrale 2 jusqu'à la paroi externe de la portion périphérique 3 offre une grande liberté dans la modulation des caractéristiques mécaniques de manière radiale ou sensiblement radiale.

Chaque couche est formée au moins par un ou plusieurs deuxièmes éléments filaires 6 qui sont enroulés en spirale autour de la portion centrale 2 et sur la couche inférieure le cas échéant. Le bobinage spiralé présent dans chaque couche est défini au moins par les caractéristiques techniques suivantes :
- le nombre de deuxième éléments filaires 6 bobinés dans une couche ;
- les caractéristiques techniques intrinsèques du ou des deuxièmes éléments filaires 6 utilisés avec par exemple le module d'élasticité, la section, la composition chimique, l'état de surface ;
- la tension de bobinage de chaque élément filaire bobiné ;
- le pas de bobinage, c'est-à-dire le décalage selon la première direction AA lorsqu'un tour complet est réalisé ce qui a pour équivalent l'angle existant entre la première direction AA et l'axe longitudinal du deuxième élément filaire ;
- l'utilisation ou non d'une résine d'imprégnation et la composition de la résine d'imprégnation le cas échéant pour chaque élément filaire.

Les caractéristiques mécaniques d'une couche sont fonctions des caractéristiques de bobinage ainsi que de la composition de la deuxième résine 7 dans ladite couche.

Afin de former une préforme dentaire 1 qui possède des caractéristiques mécaniques qui se rapprochent de celle d'une dent naturelle, il est avantageux de former une portion périphérique 3 qui possède un gradient de module d'élasticité selon une direction perpendiculaire à la première direction AA. Le module d'élasticité est croissant dans la portion périphérique 3 à partir de l'interface avec la portion centrale 2 et en s'éloignant de la portion centrale 2. Le module d'élasticité est avantageusement le module d'élasticité selon la première direction AA et/ou selon la direction perpendiculaire à la première direction AA.

De manière préférentielle, le gradient de module d'élasticité dans la portion périphérique 3 est croissant de manière monotone à partir de l'interface avec la portion centrale 2 jusqu'à au moins 50% de l'épaisseur de la portion périphérique 3 et encore plus préférentiellement sur au moins 75% de l'épaisseur voire sur toute l'épaisseur de la portion périphérique 3. De manière encore plus préférentielle, le gradient de module d'élasticité dans la portion périphérique 3 est linéairement croissant à partir de l'interface avec la portion centrale 2 jusqu'à au moins 50% de l'épaisseur de la portion périphérique et encore plus préférentiellement sur au moins 75% de l'épaisseur voire sur toute l'épaisseur de la portion périphérique 3.

Dans un mode de réalisation avantageux, à l'extrémité externe de la portion périphérique 3, le module d'élasticité est supérieur à 80GPa et inférieur à 20GPa à proximité immédiate ou dans la portion centrale 2. De manière privilégiée, le gradient de module d'élasticité s'étend sur au moins 40GPa.

Pour réduire la propagation des microfractures depuis la face externe de la préforme dentaire 1 vers la portion centrale 2, il est avantageux de faire décroitre la valeur du module d'élasticité au fur et à mesure que l'on se rapproche de la portion centrale 2, de préférence sur au moins 40GPa et encore plus préférentiellement de manière linéairement décroissante.

Pour obtenir un gradient du module d'élasticité sur plusieurs couches, les caractéristiques de bobinages évoluent d'une couche à l'autre ou d'un ensemble de couches à l'autre.

Le gradient de module d'élasticité peut être obtenue en modifiant au moins un des paramètres suivants :
- le nombre de deuxièmes éléments filaires 6 dans la couche,
- la valeur du pas de bobinage,
- la composition chimique de la deuxième résine 7,
- la tension de bobinage du deuxième élément filaire 6,
- la section et/ou la composition chimique du ou des éléments filaires formant le deuxième élément filaire 6,
- l'état de surface du deuxième élément filaire 6.

La modification de la composition chimique de la deuxième résine 7 ou de la deuxième résine d'imprégnation peut être une modification de la teneur en charges, par exemple la teneur en microparticules, la teneur en nanoparticules, la teneur en microfibres (whiskers). La modification de la composition chimique peut être une modification de la composition chimiques des charges. Les modifications réalisées sur la deuxième résine 7 ont pour effet de modifier ses caractéristiques mécaniques selon la direction perpendiculaire à la première direction AA et selon la première direction. Par exemple, pour augmenter la valeur du module d'élasticité en s'éloignant de la portion centrale 2, il est possible d'augmenter la teneur en charges (les autres paramètres n'ayant pas évolué) dans les couches, au fur et à mesure que l'on s'éloigne de la portion centrale 2. Il est également possible de modifier plusieurs paramètres entre deux couches successives, par exemple le pas de bobinage et la teneur en charges.

Dans un mode de réalisation, une couche est formée par plusieurs spires issues d'un même fil bobiné autour de la portion centrale 2. Dans une alternative de réalisation, plusieurs fils différents sont bobinés autour de la portion centrale 2. Les fils d'une même couche peuvent être identiques en section et en composition. Il est également possible de prévoir des fils de même composition et de sections différentes pour utiliser des fils ayant des performances mécaniques différentes. **Il** est encore possible d'utiliser des fils ayant des compositions différentes avec des sections identiques ou différentes pour former une couche avec des fils ayant des performances mécaniques différentes. Lorsque les couches sont formées par des fils ayant des performances mécaniques différentes, la modification de la proportion des fils entre deux couches permet de modifier la valeur du module d'élasticité entre deux couches, les autres paramètres étant inchangés. **Il** est bien entendu possible de modifier ce paramètre et au moins un autre choisi parmi le pas de bobinage et la composition de la deuxième résine 7.

Selon l'invention, en plus du ou des deuxièmes éléments filaires 6 et de la deuxième résine 7, au moins une couche possède une nappe 8 qui fait le tour de la portion centrale 2. La nappe 8 peut être un tissu ou un élément tissé, un ruban ou une tresse. Le tissu possède des fils de trame 8b et des fils de chaine 8a. L'élément tissé se distingue du tissu en ce qu'il est dépourvu de fil de trame. Il existe des quasi-fils de trame qui sont orientés comme le fil de trame d'un tissu mais qui sont mécaniquement distincts. Les quasi-fils de trames ne se rejoignent pas.

Il est particulièrement avantageux d'utiliser des nappes 8 et notamment des nappes 8 qui ont des fils ou éléments filaires orientés parallèlement à la première direction AA. Lorsque la préforme 1 est utilisée pour former un élément prothétique de type inlay-core, les fils ou éléments filaires orientés selon la première direction AA permettent un meilleur transfert des efforts selon la hauteur de l'élément prothétique, c'est-à-dire selon la direction qui relie l'apex radiculaire au sommet de la partie coronaire. Les fils ou éléments filaires améliorent les caractéristiques de résistance mécanique et de ténacité lors des efforts masticatoires. Un tel gain est observé pour des efforts selon la première direction AA ou selon un décalage angulaire égal à 45°.

Dans ce cas de figure, il est avantageux de former une préforme dont la dimension maximale perpendiculaire à la première direction AA, par exemple un diamètre, est inférieure à 40mm. La disposition des éléments filaires dans la portion centrale 2 et dans la portion périphérique 3 et éventuellement le diamètre de la préforme peuvent être choisis en fonction de la dent à remplacer, par exemple ses dimensions, sa position dans la bouche et les caractéristiques des dents adjacentes.

Il est également possible de former des préformes dentaires de plus grande dimension selon la direction perpendiculaire à la première direction AA et encore plus préférentiellement selon la première direction AA. La préforme peut avoir un diamètre supérieur à 5cm, avantageusement supérieur à 10cm et encore plus avantageusement supérieur à 20cm. L'épaisseur selon la première direction AA est avantageusement supérieure à 1cm, plus avantageusement supérieure à 2cm et encore plus avantageusement supérieure à 3cm. Les préformes dentaires peuvent alors être utilisées pour former des infrastructures de prothèses dento-portées, adjointes ou conjointes, ou encore d'implants.

De manière préférentielle, la nappe 8 est un tissu ou un élément tissé dont le fil de trame ou le quasi-fil de trame est orienté majoritairement selon une direction parallèle à la première direction et dont les fils de chaine sont disposés perpendiculairement à la première direction AA.

La nappe 8 est plus large que le deuxième élément filaire 6 selon la première direction AA, de préférence légèrement plus large que le deuxième élément filaire 6 pour rester pleinement compatible avec le pas de bobinage. Préférentiellement, lorsque plusieurs deuxièmes éléments filaires sont utilisés dans une même couche, la nappe 8 s'étend sur un peu plus que la largeur occupée par les deuxièmes éléments filaires 6. L'utilisation de la nappe 8 ne modifie pas les caractéristiques de bobinage.

De manière préférentielle, le bobinage de la nappe 8 est réalisé de manière à avoir un recouvrement des extrémités des spires selon la première direction AA. La nappe 8 forme alors un tube tout autour de la portion centrale 2 sur toute la hauteur de la préforme dentaire 1.

Le ou les deuxièmes éléments filaires 6 sont disposés entre deux nappes 8 consécutives. Deux spires de deux couches consécutives sont séparées par une nappe 8.

Selon l'invention, la nappe 8 s'étend continument sur plusieurs couches successives. En d'autres termes, la nappe 8 forme plusieurs tubes concentriques autour de la portion centrale 2. La connexion entre les tubes est réalisée aux deux extrémités opposées de la préforme selon la première direction AA de manière alternée entre l'extrémité supérieure et l'extrémité inférieure ou droite et gauche. Selon l'invention, la nappe 8 s'étend continument sur toutes couches de la portion périphérique 3.

La nappe 8 peut former plusieurs tours complets autour de la portion centrale 2, par exemple deux tours complets, cinq tours complets ou plus de dix tours complets. Le nombre de tours complet peut être défini par le diamètre final recherché pour la préforme dentaire.

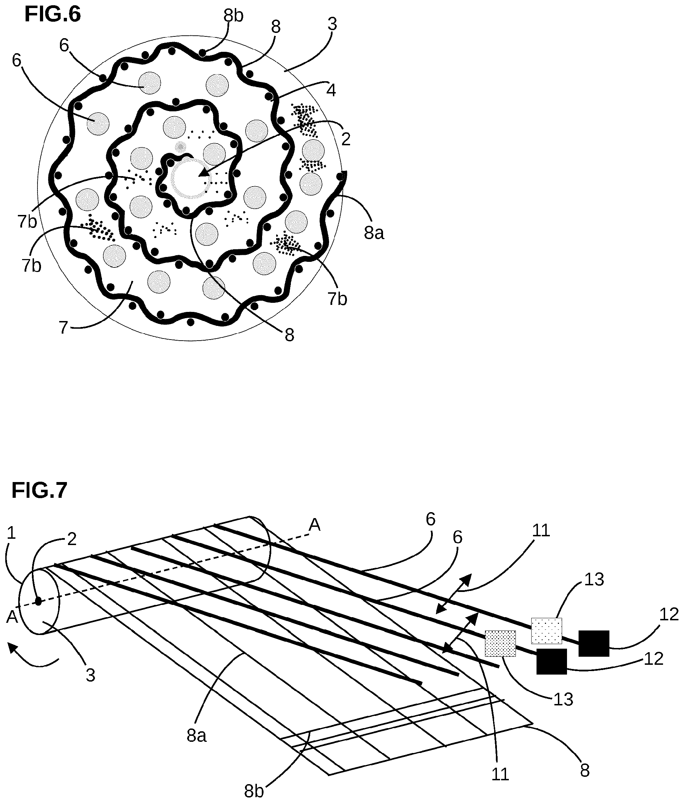

Selon les modes de réalisation, lors du bobinage, la nappe 8 est déposée systématiquement sous ou au-dessus du au moins un deuxième élément filaire 6 de la couche. Dans une observation selon un plan de coupe perpendiculaire à la première direction AA, comme cela est illustré à la figure 6 et selon l'invention, la nappe 8 s'étend continûment sur plusieurs couches et se présente sous la forme d'une spirale. L'utilisation d'une nappe en spirale qui s'étend sur toutes les couches permet d'avoir une bonne transmission des efforts entre la partie externe de la préforme et sa portion centrale. Une telle configuration permet à la préforme de se rapprocher du fonctionnement mécanique d'une dent naturelle.

La disposition en spirale des nappes et des deuxièmes éléments filaires 6 introduit un effet de serrage ce qui permet de former des éléments filaires très résistants. La disposition en spirale permet également d'améliorer la ténacité de la préforme dentaire ce qui facilite le blocage des microfissures.

La disposition en spirale permet d'installer des éléments filaires de grande longueur dans une préforme de dimension réduite. La longueur de l'élément filaire, par exemple un fil de chaine ou un deuxième élément filaire peut être au moins cinq fois la hauteur de la préforme, de préférence au moins 10 fois la hauteur, ou au moins 20 fois la hauteur. La longueur de l'élément filaire, par exemple un fil de chaine ou un deuxième élément filaire peut être au moins cinq fois le diamètre de la préforme, de préférence au moins 10 fois le diamètre, ou au moins 20 fois le diamètre. L'utilisation d'éléments filaires très longs procure une meilleure résistance mécanique à la préforme.

La préforme dentaire formée peut être une préforme à usiner ou une préforme à découper. Lorsque l'on réalise une préforme à usiner, c'est-à-dire à usiner sans passer par une étape préalable de découpe perpendiculairement à la première direction, il est avantageux que la préforme soit de dimension réduite, par exemple avec un diamètre inférieur à 50mm. La préforme présente un volume qui est du même ordre de grandeur que celui d'une dent. Un préhenseur 9 est fixé à la préforme pour faciliter l'usinage comme cela est illustré à la figure 1. L'usinage de la préforme définit préférentiellement un inlay-core avantageusement par une technique d'usinage dite CAD- CAM milling. La préforme dentaire peut également former une reconstitution corono-radiculaire. La préforme est alors recouverte par une couronne qui peut être en céramique, en matériau composite et préférentiellement en zircone. **Il** est encore possible d'utiliser la préforme dentaire pour former un pilier d'implant. La configuration mécanique de la préforme est particulièrement avantageuse pour supporter les efforts masticatoires qui sont multidirectionnels. **Il** est également possible de former des préformes plus larges, mais cela pose des problématiques de fabrication et de maintien des couches les unes sur les autres. Les préformes plus larges peuvent former des infrastructures de bridge, par exemple sur dents naturelles ou implantaires.

Lorsque l'on forme une préforme à usiner, la préforme doit être découpée une ou plusieurs fois perpendiculairement à la première direction AA afin de définir une pluralité de préforme élémentaire qui formeront les préformes à usiner. **Il** est avantageux de former une préforme plus haute selon la première direction AA pour être apte à former plusieurs préformes à usiner. **Il** est également avantageux de former des préformes plus larges pour adapter la préforme à d'autres utilisation que la formation d'inlay-core, par exemple des infrastructures de bridge, par exemple sur dents naturelles ou implantaires. L'étape de découpage permet d'adapter la hauteur de la préforme en fonction des besoins. Pour former facilement une préforme de largeur importante, il est préférable de former une préforme de hauteur importante ce qui facilite le bon maintien des deuxièmes éléments filaires et les nappes entre elles sur les multiples couches.

La préforme est plus déformable qu'un équivalent métallique et par exemple les supports en métaux à mémoire de forme. La déformabilité de la préforme est définie au moyen des performances mécaniques des différentes couches. Une préforme avec des grandes dimensions et un gradient de module d'élasticité permet de mieux adapter les performances de la préforme aux contraintes des arcades dentaires. La préforme peut avoir une section circulaire ou ovale ou selon une forme proche de ces dernières pour mieux s'adapter à la forme des arcades dentaires et ainsi mieux adapter les propriétés mécaniques.

La préforme dentaire à usiner directement est usinée afin de former une prothèse dentaire de type inlay-core avec une zone canalaire et une zone coronaire. La zone canalaire est destinée à s'introduire dans le canal dentaire d'une racine dentaire d'un modèle de laboratoire. La zone coronaire est destinée à former la partie coronaire de la dent détruite par la carie, par exemple pour soutenir une coiffe prothétique périphérique. La préforme dentaire est usinée de sorte que la portion centrale s'enfonce dans le canal dentaire et s'étende dans la partie coronaire. Une partie de la portion périphérique 3 est complètement éliminée pour former la partie canalaire. La portion périphérique est usinée et en partie conservée afin de former la partie coronaire qui va simuler la dentine d'une dent naturelle. La portion périphérique est usinée afin de définir une forme qui se rapproche de la forme de la dentine à remplacer.

La préforme dentaire 1 est usinée au moyen de toute machine d'usinage adaptée, de préférence une machine d'usinage assistée par ordinateur par exemple de 3 axes à 5 axes. La préforme dentaire 1 est usinée afin de reproduire une forme prédéfinie qui est calculée au moins à partir de l'empreinte de la dent à réparer.

Les figures 2 et 3 représentent deux modes de réalisation où la préforme dentaire 1 possède un préhenseur 9. Dans le mode de réalisation de la figure 2, le préhenseur 9 est fixé sur la paroi latérale externe de la portion périphérique 3. Dans le mode de réalisation de la figure 2, le préhenseur 9 est fixé sur une face d'extrémité, c'est-à-dire une face sur laquelle débouche les premier éléments filaires 4.

La formation de plusieurs couches concentriques, préférentiellement avec des spires obtenues par bobinage et avantageusement par bobinage en nid d'abeille permet de définir plus précisément les performances mécaniques de la portion périphérique 3 pour chaque couche et donc l'évolution des caractéristiques en fonction de l'éloignement par rapport à la portion centrale 2.

Ce mode de réalisation permet de former une préforme dentaire avec des caractéristiques mécaniques qui sont sensiblement identiques tout autour de la portion centrale en fonction de la valeur du rayon. **Il** est alors possible de définir les caractéristiques techniques attendues en fonction des caractéristiques de bobinage de la couche ce qui inclut la composition de la résine utilisée dans la couche.

La préforme dentaire 1 peut être formée de différentes manières. La portion périphérique 3 est formée sur un mandrin 10. Dans un mode de réalisation, le mandrin 10 est formé par la portion centrale 2, c'est-à-dire l'ensemble formé par les premiers éléments filaires 4 et la première résine 5.

Dans un autre mode de réalisation, le mandrin 10 est un autre élément, c'est-à-dire un élément qui ne fait pas partie de la préforme dentaire 1, par exemple un mandrin métallique. La portion périphérique 3 est formée autour du mandrin 10. Ensuite, le mandrin 10 est éliminé ce qui forme un trou dans la portion périphérique 3. Le trou est alors rempli par la première résine 5 et les premier éléments filaires 4 pour former la portion centrale 2 définie précédemment. Ce mode de réalisation est particulièrement adapté pour former une préforme à découper.

Le mandrin 10 s'étend selon la première direction AA. Dans un mode de réalisation, le mandrin 10 tourne autour de la première direction AA qui passe à travers le mandrin 10. Dans un autre mode de réalisation, les deuxièmes éléments filaires 6 tournent autour du mandrin 10.

La portion périphérique 3 est formée autour du mandrin 10 en formant une pluralité de couches les unes sur les autres. La portion périphérique 3 se présente sous la forme d'un anneau autour de la portion centrale 2 dans un plan de coupe perpendiculaire à la première direction AA. La portion périphérique 3 est formée en déposant un ou plusieurs deuxièmes éléments filaires 6 qui entourent le mandrin 10 et en déposant la deuxième résine 7. La deuxième résine 7 lie mécaniquement les deuxièmes éléments filaires 6 entre eux.

Le ou les deuxièmes éléments filaires 6 définissent une pluralité de couches disposées les unes sur les autres perpendiculairement à la première direction AA. Les couches font le tour du mandrin 10.

Les deuxièmes éléments filaires 6 sont bobinés pour définir les différentes couches de la portion périphérique 3. Les deuxièmes éléments filaires 6 de chaque couche présentent une direction longitudinale qui est décalée par rapport à la première direction d'un angle compris entre 10° et 80° ou entre 100° et 170°. Le bobinage est réalisé avec un certain décalage angulaire par rapport à la première direction AA et par rapport à la perpendiculaire à la première direction AA. Les deuxièmes éléments filaires 6 sont préférentiellement bobinés depuis une extrémité jusqu'à l'autre extrémité du mandrin 10.

La formation de la portion périphérique 3 est réalisée de sorte que deux couches consécutives présentent des deuxièmes éléments filaires 6 ayant des orientations opposées. Les deuxièmes éléments filaires 6 de deux couches consécutives définissent un maillage lors d'une observation perpendiculaire à la première direction AA. Ainsi, si dans une première couche le bobinage des deuxièmes éléments filaire est réalisé « montant » ou « dextrogyre », le bobinage des couches immédiatement consécutives inférieure et supérieure est réalisé « descendant » ou « lévogyre » et inversement.

Lors de la formation de la portion périphérique 3, les deuxièmes éléments filaires 3 de chaque couche n'appartiennent pas à un tissu ou à un élément tissé.

Afin de former la portion périphérique 3 de manière efficace, il est particulièrement avantageux de réaliser un bobinage en nid d'abeille du ou des deuxièmes éléments filaires 6 sur le mandrin 10. Dans un bobinage en nid d'abeille, un ou plusieurs deuxièmes éléments filaire 6 sont bobinés autour du mandrin 10 de manière continue. Le ou les éléments filaires 6 sont fournis par un bras 11 qui se déplace dans un sens depuis une première butée jusqu'à atteindre une deuxième butée. Une fois la deuxième butée atteinte, le bras 11 **se** déplace dans l'autre sens. Le déplacement du bras 11 est lié à la rotation du mandrin 10 sur lui-même ou à la rotation du bras autour du mandrin 10, mais ce deuxième mode de réalisation est moins avantageux car il est plus difficile à mettre en œuvre. La réalisation du bobinage en nid d'abeille est connue en soi et a été utilisée pour former des inductances électriques.

Le bobinage en nid d'abeille est particulièrement avantageux car il permet de réaliser rapidement et de manière maitrisée, les spires de chaque couche et plus particulièrement des spires dans des directions opposées pour deux couches consécutives. La position des deuxièmes éléments filaire est définie par la position du bras 11 mobile ce qui permet de placer les éléments filaires les uns sur les autres de manière reproductible lorsque le pas de bobinage est constant entre deux couches dans le même sens.

Un tel mode de bobinage autorise une modification aisée de la tension dans les deuxièmes éléments filaires 6 lors du bobinage. Un tel mode de réalisation permet également de modifier facilement la relation entre le déplacement du bras 11 et la rotation du mandrin 10.

L'épaisseur des deuxièmes éléments filaires 7 étant connue, il est possible de connaitre l'épaisseur d'une couche. Le cas échéant, l'épaisseur de la nappe 8 est également connue. Pour modifier les caractéristiques mécaniques de la portion périphérique 3 en fonction de son éloignement par rapport à l'axe de rotation du mandrin 10 ou à la surface externe du mandrin, il est possible de compter le nombre de tours réalisés et d'estimer l'épaisseur correspondante.

On définit des conditions de bobinage pour chaque tour de la préforme dentaire 1 et on forme la préforme dentaire 1 en bobinant les deuxièmes éléments filaires 6 selon les conditions de bobinage c'est-à-dire en imposante les caractéristiques du bobinage, la composition des deuxièmes éléments filaires 6, la composition de la deuxième résine 7 et la composition de la résine d'imprégnation le cas échéant.

La figure 5 illustre un mode de réalisation particulier de la configuration décrite plus haut avec un mandrin 10 monté rotatif autour de la première direction AA. Plusieurs deuxièmes éléments filaires 6 sont fournis et passent à travers une filière 12 montée sur un bras 11 mobile. La rotation du mandrin 10 entraine le déplacement du bras 11 et des filières 12 dans un mouvement de va et vient parallèlement à la première direction AA. La valeur de déplacement du bras 11 lorsqu'un tour de mandrin 10 est réalisé définit la valeur de l'angle qui existe entre la direction AA et l'axe longitudinal des deuxièmes éléments filaires 6.

Les deuxièmes éléments filaires 6 passent à travers un bac d'imprégnation 13 qui contient une résine d'imprégnation ou la deuxième résine 5. En modifiant la composition de la résine dans le bac d'imprégnation 13, il est possible de modifier la composition de la résine en fonction du nombre de couches déposées, c'est-à-dire du nombre de tours de mandrin 10 depuis l'interface avec le mandrin 10. Cette modification permet de définir le gradient de module d'élasticité. De manière préférentielle, le bac d'imprégnation fournit la deuxième résine 7. Il est possible de régler le taux d'imprégnation du au moins deuxième élément filaire ce qui permet de définir au moins en partie l'épaisseur de la couche.

Dans le mode de réalisation illustré à la figure 5, trois deuxièmes éléments filaires élémentaires sont fournis et se rejoignent pour former un unique deuxième élément filaire 6. En modulant le nombre d'éléments filaires élémentaires qui passent à travers le réservoir d'imprégnation 13, il est possible de régler la quantité de deuxième résine 7 qui est déposée.

Dans une alternative de réalisation, le bras 11 bouge uniquement le deuxième élément filaire 6 ou le réservoir d'imprégnation 13 afin de déplacer le deuxième élément filaire 6 pour former les spires.

Dans une alternative de réalisation illustré à la figure 7, chaque fil est associé à un bac d'imprégnation 13 spécifique.

La figure 7 illustre un mode de réalisation proche de celui de la figure 5 où quatre éléments filaires 6 sont bobinés autour du mandrin 10. Par soucis de clarté, seulement deux éléments filaires 6 passent à travers une filière 12 montée sur une bras 11 mobile. Le déplacement du bras 11 dans un mouvement de va et vient est lié à la rotation du mandrin 10 comme précédemment.

Les deux éléments filaires 6 passent à travers deux bacs d'imprégnation 13 différents ce qui permet de modifier la résine associée à chacun des éléments filaires 6 de manière indépendante en fonction du nombre de tours de mandrin 10 réalisés.

La figure 7 illustre également le bobinage d'une nappe 8 autour du mandrin 10. La nappe 8 et les deuxièmes éléments filaires 6 sont bobinés dans le même sens. La nappe 8 s'étend sur toute la hauteur de la préforme dentaire 1 ou sur plus que toute la hauteur de la préforme dentaire 1 à former, par exemple sur toute la longueur active du mandrin 10 selon la première direction AA.

La nappe 8 est bobinée sans pas de bobinage selon la première direction AA ou avec un pas de bobinage compatible avec un recouvrement totale de la hauteur de la préforme dentaire 1 à chaque tour. Dans ce mode de réalisation, il est avantageux d'utiliser plusieurs deuxièmes éléments filaires 6 qui sont répartis sur la largeur de la nappe 8, de préférence uniformément répartis sur la largeur de la nappe 8. Chacun des deuxièmes éléments filaires 6 forme des spires autour de la portion centrale 2, chacune des spires s'étendant d'une extrémité à l'autre de la future préforme dentaire 1 selon la première direction AA. Les spires sont décalées les unes des autres selon la première direction AA et peuvent s'étendre au-delà de la hauteur de la préforme 1.

Lorsque plusieurs deuxièmes éléments filaires 6 sont utilisés dans une couche, il est avantageux d'associer un bac d'imprégnation spécifique pour chaque deuxième élément filaire pour être en mesure de dissocier la composition de la deuxième résine associée et ainsi mieux maitriser l'évolution des caractéristiques mécaniques selon la direction radiale.

Lorsque plusieurs deuxièmes éléments filaires 6 sont utilisés dans une couche, il est avantageux d'utiliser un bras 11 indépendant pour chaque deuxième élément filaire 6 pour être en mesure de dissocier le pas de bobinage et ainsi mieux maitriser l'évolution des caractéristiques mécaniques selon la direction radiale.

Une fois la préforme dentaire 1 totalement bobinée, il est avantageux de réaliser la polymérisation de la deuxième résine 7 et de la deuxième résine d'imprégnation le cas échéant.

De manière préférentielle, la préforme dentaire 1 bobinée et polymérisée présente une section circulaire. Les caractéristiques mécaniques de la portion périphérique 3 évoluent selon la distance par rapport au centre de la préforme dentaire 1 perpendiculairement à la première direction AA.

Dans un mode de réalisation particulier, la préforme dentaire 1 est fournie puis une étape de découpe est réalisée de manière à définir une pluralité de préformes élémentaires à partir de la préforme initiale. Le plan de découpe ZZ est préférentiellement perpendiculaire à la première direction AA. Il est alors possible de former une préforme élémentaire avec la hauteur choisie (la dimension selon la première direction AA) en fonction des besoins.

La préforme dentaire 1 ou la préforme dentaire élémentaire est destinée à être usinée pour former un élément prothétique dentaire, la dimension selon la première direction AA est préférentiellement comprise entre 10 mm et 60 mm en fonction de l'élément prothétique à former.

Il est avantageux que la préforme dentaire 1 soit dépourvue d'élément filaire qui s'étend principalement perpendiculairement ou perpendiculairement à la première direction AA et qui soit commun à la portion centrale 2 et à la portion périphérique 3. La préforme dentaire 4 est dépourvue d'élément filaire qui passe à travers les premiers éléments filaire 4 et entre les spires de deuxièmes éléments filaires 6.

Il est avantageux que la préforme dentaire 1 soit dépourvue d'élément filaire qui s'étend perpendiculairement à la première direction AA et de manière radiale dans la portion périphérique 3.

Il est avantageux que la préforme soit dépourvue d'élément filaire qui s'étend perpendiculairement à la première direction AA et de manière radiale dans la portion centrale 2.

Lors des opérations de découpe perpendiculairement à la première direction AA ou lors des opérations d'usinage, les zones d'extrémités de la préforme dentaire 1 sont supprimées. Les spires terminales qui relient une couche avec la couche consécutive en allant vers l'extérieur ou en allant vers l'intérieur sont éliminées. Ces zones de liaison mécaniques entre les spires proviennent d'un bobinage en nid d'abeille. L'élimination des spires terminales fait que les spires sont uniquement reliées mécaniquement au moyen de la deuxième résine 7. Sans cette deuxième résine 7, les spires sont mécaniquement dissociées les unes des autres.

De manière préférentielle, la préforme dentaire 1 se présente sous la forme d'un disque avec une section circulaire constante d'une extrémité à l'autre de la préforme selon la première direction. En alternative, la section peut être un cercle avec un méplat. D'autres formes sont possibles avec une section constante d'une extrémité à l'autre de la préforme dentaire 1 selon la première direction AA. La préforme dentaire est destinée à former une prothèse dentaire pour une installation, de préférence, sur un modèle de laboratoire.

## Revendications

1. Préforme dentaire (1) comportant :
- une portion centrale (2) formée par une pluralité de premiers éléments filaires (4) et une première résine (5), les premiers éléments filaires (4) s'étendant majoritairement selon une première direction (AA), la première résine (5) liant mécaniquement les premiers éléments filaires (4) entre eux ;
- une portion périphérique (3) se présentant sous la forme d'un anneau autour de la portion centrale (2) perpendiculairement à la première direction (AA), la portion périphérique (3) comportant des deuxièmes éléments filaires (6) et une deuxième résine (7), la deuxième résine (7) liant mécaniquement les deuxièmes éléments filaires (6) entre eux, les premiers éléments filaires (4) et les deuxièmes éléments filaires (6) étant liés mécaniquement entre eux au moins par la première résine (5) et la deuxième résine (7) ;
préforme dentaire (1)
dans laquelle la portion périphérique (3) comporte une pluralité de couches disposées les unes sur les autres perpendiculairement à la première direction (AA), les couches faisant le tour de la portion centrale (2) ;
dans laquelle chaque couche possède au moins une spire formée par au moins un des deuxièmes éléments filaires (6), le au moins un deuxième élément filaire (6) présentant une direction longitudinale qui est décalée par rapport à la première direction (AA) d'un angle compris entre 10° et 80° ou entre 100° et 170° ;
dans laquelle les deuxièmes éléments filaires (6) de deux couches consécutives présentent des orientations opposées ;
dans laquelle les deuxièmes éléments filaires (6) de chaque couche n'appartiennent pas à un tissu ou à un élément tissé ;
dans laquelle au moins plusieurs couches de la pluralité de couches possèdent, en outre, une nappe (8) choisie parmi un tissu, un élément tissé, un ruban, une tresse, la nappe (8) étant située sous ou au-dessus des deuxièmes éléments filaires (6) dans lesdites plusieurs couches ;
et dans laquelle la nappe (8) s'étend d'une extrémité à l'autre de la préforme dentaire (1) selon la première direction (AA) et s'étend sur toutes les couches, la nappe (8) se présentant sous la forme d'une spirale dans un plan de coupe perpendiculaire à la première direction (AA), avec une alternance entre une épaisseur de nappe (8) et une épaisseur de deuxième élément filaire (6) selon une direction d'observation perpendiculaire à la première direction (AA) et dirigée depuis la portion centrale (2) jusqu'à une extrémité de la portion périphérique (3).

2. Préforme dentaire (1) selon la revendication 1 dans laquelle la portion centrale (2) possède des éléments filaires qui sont majoritairement en volume les premiers éléments filaires (4).

3. Préforme dentaire (1) selon la revendication 2 dans laquelle la portion centrale (2) comporte exclusivement les premiers éléments filaires (4) et la première résine (5).

4. Préforme dentaire (1) selon l'une des revendications 1 à 3, dans laquelle la portion périphérique (3) possède un gradient de module d'élasticité croissant en s'éloignant de la portion centrale (2) perpendiculairement à la première direction (AA) ;
dans laquelle la portion périphérique (3) présente une teneur en deuxième élément filaire (6) qui est croissante de manière monotone en s'éloignant de la portion centrale (2) perpendiculairement à la première direction (AA) pour former le gradient de module d'élasticité ;
et/ou dans laquelle la deuxième résine (7) est dopée avec des particules et dans laquelle la portion périphérique (3) présente un rapport de la teneur en deuxième élément filaire (6) sur la teneur en particules qui est croissant selon la direction radiale en s'éloignant de la portion centrale (2) perpendiculairement à la première direction (AA) pour former le gradient de module d'élasticité.

5. Préforme dentaire (1) selon la revendication 4, dans laquelle la deuxième résine (7) est dopée avec des particules et dans laquelle la portion périphérique (3) présente un rapport de la teneur en deuxième élément filaire (6) sur la teneur en particules qui est croissant selon la direction radiale en s'éloignant de la portion centrale (2) perpendiculairement à la première direction (AA) pour former le gradient de module d'élasticité et dans laquelle le rapport de la teneur en deuxième élément filaire (6) sur la teneur en particules est croissant de manière inversement proportionnelle à la distance à la portion centrale (2) pour former le gradient de module d'élasticité.

6. Préforme dentaire (1) selon l'une des revendications 1 à 5 dans laquelle chaque couche comporte plusieurs deuxièmes éléments filaires (6) bobinés en spires autour de la portion centrale (2).

7. Procédé de fabrication d'une préforme dentaire (1) comportant les étapes suivantes :
- fournir un mandrin (10) s'étendant selon une première direction (AA) ;
- former une portion périphérique (3) sous la forme d'un anneau autour du mandrin (10) perpendiculairement à la première direction (AA), la portion périphérique (3) possédant une pluralité de couches faisant le tour du mandrin (10), les couches étant disposées les unes autour des autres perpendiculairement à la première direction (AA), chaque couche comportant au moins un deuxième élément filaire (6) et une deuxième résine (7), la deuxième résine (7) liant mécaniquement les deuxièmes éléments filaires (6) entre eux dans la portion périphérique (3) ;
procédé de fabrication
dans lequel le au moins un deuxième élément filaire (6) de chaque couche présente une direction longitudinale qui est décalée par rapport à la première direction (AA) d'un angle compris entre 10° et 80° ou entre 100° et 170° ;
dans lequel les au moins un deuxième élément filaire (6) de deux couches consécutives présentent des orientations opposées ;
dans lequel le au moins un deuxième élément filaire (6) de chaque couche n'appartient pas à un tissu ou à un élément tissé ;
dans lequel le mandrin (10) est une portion centrale (2) formée par une pluralité de premiers éléments filaires (4) et une première résine (5), les premiers éléments filaires (4) s'étendant majoritairement selon la première direction (AA), la première résine (5) liant mécaniquement les premiers éléments filaires (4) entre eux, les premiers éléments filaires (4) et les deuxièmes éléments filaires (6) étant liés entre eux au moins par la première résine (5) et la deuxième résine (7), ou dans lequel le mandrin (10) est retiré pour définir une zone vide dans la portion périphérique (3), la zone vide étant remplie par une pluralité de premiers éléments filaires (4) et une première résine (5), les premiers éléments filaires (4) s'étendant majoritairement selon la première direction (AA), les premiers éléments filaires (4) et les deuxièmes éléments filaires (6) étant liés entre eux au moins par la première résine (5) et la deuxième résine (7) ;
dans lequel au moins plusieurs couches de la pluralité de couches possèdent, en outre, une nappe (8) choisie parmi un tissu, un élément tissé, un ruban, une tresse, la nappe (8) étant située sous ou au-dessus des deuxièmes éléments filaires (6) dans lesdites plusieurs couches ;
dans lequel la nappe (8) s'étend d'une extrémité à l'autre de la préforme dentaire (1) selon la première direction (AA) et s'étend sur toutes les couches, la nappe (8) se présentant sous la forme d'une spirale dans un plan de coupe perpendiculaire à la première direction (AA), avec une alternance entre une épaisseur de nappe (8) et une épaisseur de deuxième élément filaire (6) selon une direction d'observation perpendiculaire à la première direction (AA) et dirigée depuis la portion centrale (2) jusqu'à une extrémité de la portion périphérique (3).

8. Procédé de fabrication d'une préforme dentaire (1) selon la revendication 7 dans lequel deux couches successives partagent le au moins un deuxième élément filaire (6) et dans lequel les spires sont formées par un bobinage en nid d'abeille, et préférentiellement le au moins un deuxième élément filaire (6) s'étend continument sur toutes les couches de la portion périphérique (3).

9. Procédé de fabrication d'une préforme dentaire (1) selon l'une des revendications 7 et 8 dans lequel chaque couche (6) comporte, en outre, une nappe (8) formée par un tissu ou un élément tissé dont le fil de trame ou de quasi-trame s'étend selon la première direction (AA).

10. Procédé de fabrication d'une préforme dentaire (1) selon l'une des revendications 7 à 9 comportant au moins une découpe d'un ensemble formé par la portion centrale (2) et la portion périphérique (3) perpendiculairement à la première direction (AA) pour définir la dimension de la préforme dentaire (1) selon la première direction (AA).

11. Procédé de fabrication d'une prothèse dentaire (1) comportant les étapes suivantes :
- une fourniture d'une préforme dentaire (1) selon l'une quelconque des revendications 1 à 6 ;
- un usinage de la préforme dentaire (1) dans lequel une partie de la portion périphérique (3) est complètement éliminée pour atteindre la portion centrale (2) destinée à former un ancrage canalaire, et une autre partie de la portion périphérique (3) est partiellement éliminée pour former une portion coronaire de la prothèse dentaire (1) selon une forme prédéfinie.

12. Procédé de fabrication d'une prothèse dentaire (1) selon la revendication précédente comportant avant l'usinage, une découpe de la préforme dentaire perpendiculairement à la première direction (AA) pour définir la dimension de la préforme dentaire selon la première direction (AA).

## Patentansprüche

1. Dentalvorform (1), umfassend:
- einen zentralen Abschnitt (2), der aus einer Vielzahl von ersten fadenförmigen Elementen (4) und einem ersten Harz (5) gebildet ist, wobei die ersten fadenförmigen Elemente (4) sich überwiegend in einer ersten Richtung (AA) erstrecken, wobei das erste Harz (5) die ersten fadenförmigen Elemente (4) mechanisch miteinander verbindet;
- einen Umfangsabschnitt (3), der die Form eines Rings um den zentralen Abschnitt (2) herum senkrecht zur ersten Richtung (AA) aufweist, wobei der Umfangsabschnitt (3) zweite fadenförmigen Elemente (6) und ein zweites Harz (7) umfasst, wobei das zweite Harz (7) die zweiten fadenförmigen Elemente (6) mechanisch miteinander verbindet, wobei die ersten fadenförmigen Elemente (4) und die zweiten fadenförmigen Elemente (6) mindestens durch das erste Harz (5) und das zweite Harz (7) mechanisch miteinander verbunden sind;
wobei in dieser Dentalvorform (1):
der Umfangsabschnitt (3) eine Vielzahl von Schichten umfasst, die senkrecht zur ersten Richtung (AA) übereinander angeordnet sind, wobei die Schichten um den zentralen Abschnitt (2) herum verlaufen;
jede Schicht mindestens eine Windung aufweist, die durch mindestens eines der zweiten fadenförmigen Elemente (6) gebildet wird, wobei das mindestens eine zweite fadenförmige Element (6) eine Längsrichtung aufweist, die der ersten Richtung (AA) gegenüber um einen Winkel zwischen 10° und 80° oder zwischen 100° und 170° versetzt ist;
die zweiten fadenförmigen Elemente (6) zweier aufeinanderfolgender Schichten entgegengesetzte Orientierungen aufweisen;
die zweiten fadenförmigen Elemente (6) jeder Schicht keinem Gewebe oder gewebten Element angehören;
mindestens mehrere Schichten von der Vielzahl von Schichten außerdem ein Vlies (8) aufweisen, das aus einem Gewebe, einem gewebten Element, einem Band, einem Geflecht gewählt ist, wobei das Vlies (8) unter oder über den zweiten fadenförmigen Elementen (6) in der Vielzahl von Schichten angeordnet ist; und
das Vlies (8) sich in der ersten Richtung (AA) von einem Ende zum anderen der Dentalvorform (1) erstreckt und sich auf allen Schichten erstreckt, wobei das Vlies (8) in einer Schnittebene senkrecht zur ersten Richtung (AA) die Form einer Spirale aufweist, mit einem Wechsel, in einer Richtung senkrecht zur ersten Richtung (AA) gesehen, zwischen einer Lage des Vlieses (8) und einer Lage des zweiten Fadenelements (6) und die vom zentralen Abschnitt (2) ausgehend bis zu einem Ende des Umfangsabschnitts (3) gerichtet ist.

2. Dentalvorform (1) nach Anspruch 1, wobei der zentrale Abschnitt (2) fadenförmigen Elemente aufweist, die volumenmäßig überwiegend die ersten fadenförmigen Elemente (4) sind.

3. Dentalvorform (1) nach Anspruch 2, wobei der zentrale Abschnitt (2) ausschließlich die ersten fadenförmigen Elemente (4) und das erste Harz (5) umfasst.

4. Dentalvorform (1) nach einem der Ansprüche 1 bis 3, wobei der Umfangsabschnitt (3) einen Elastizitätsmodulgradienten aufweist, der mit zunehmender Entfernung vom zentralen Abschnitt (2) senkrecht zur ersten Richtung (AA) zunimmt;
wobei der Umfangsabschnitt (3) einen Gehalt am zweiten fadenförmigen Element (6) aufweist, der mit zunehmender Entfernung vom zentralen Abschnitt (2) senkrecht zur ersten Richtung (AA) monoton zunimmt, um den Elastizitätsmodulgradienten zu bilden;
und/oder wobei das zweite Harz (7) mit Partikeln dotiert ist, und wobei der Umfangsabschnitt (3) ein Verhältnis des Gehalts am zweiten fadenförmigen Element (6) zum Partikelgehalt aufweist, das in der radialen Richtung mit zunehmender Entfernung vom zentralen Abschnitt (2) senkrecht zur ersten Richtung (AA) zunimmt, um den Elastizitätsmodulgradienten zu bilden.

5. Dentalvorform (1) nach Anspruch 4, wobei das zweite Harz (7) mit Partikeln dotiert ist, und wobei der Umfangsabschnitt (3) ein Verhältnis des Gehalts am zweiten fadenförmigen Element (6) zum Partikelgehalt aufweist, das in der radialen Richtung mit zunehmender Entfernung vom zentralen Abschnitt (2) senkrecht zur ersten Richtung (AA) zunimmt, um den Elastizitätsmodulgradienten zu bilden, und wobei das Verhältnis des Gehalts am zweiten fadenförmigen Element (6) zum Partikelgehalt umgekehrt proportional zur Entfernung vom zentralen Abschnitt (2) zunimmt, um den Elastizitätsmodulgradienten zu bilden.

6. Dentalvorform (1) nach einem der Ansprüche 1 bis 5, wobei jede Schicht mehrere zweite fadenförmigen Elemente (6) umfasst, die in Windungen um den zentralen Abschnitt (2) gewickelt sind.

7. Verfahren zur Herstellung einer Dentalvorform (1), umfassend die folgenden Schritte:
- Bereitstellen eines Dorns (10), der sich in einer ersten Richtung (AA) erstreckt;
- Bilden eines Umfangsabschnitts (3) in Form eines Rings um den Dorn (10) senkrecht zur ersten Richtung (AA), wobei der Umfangsabschnitt (3) eine Vielzahl von Schichten aufweist, die um den Dorn (10) herum verlaufen, wobei die Schichten senkrecht zur ersten Richtung (AA) umeinander herum angeordnet sind, wobei jede Schicht mindestens ein zweites fadenförmiges Element (6) und ein zweites Harz (7) umfasst, wobei das zweite Harz (7) die zweiten fadenförmigen Elemente (6) im Umfangsabschnitt (3) mechanisch miteinander verbindet;
wobei in diesem Herstellungsverfahren:
das mindestens eine zweite fadenförmige Element (6) jeder Schicht eine Längsrichtung aufweist, die der ersten Richtung (AA) gegenüber um einen Winkel zwischen 10° und 80° oder zwischen 100° und 170° versetzt ist;
die mindestens einen zweiten fadenförmigen Elemente (6) zweier aufeinanderfolgender Schichten entgegengesetzte Orientierungen aufweisen;
das mindestens eine zweite fadenförmige Element (6) jeder Schicht keinem Gewebe oder gewebten Element angehört;
der Dorn (10) ein zentraler Abschnitt (2) ist, der durch eine Vielzahl von ersten fadenförmigen Elementen (4) und ein erstes Harz (5) gebildet wird, wobei die ersten fadenförmigen Elemente (4) sich überwiegend in der ersten Richtung (AA) erstrecken, wobei das erste Harz (5) die ersten fadenförmigen Elemente (4) mechanisch miteinander verbindet, wobei die ersten fadenförmigen Elemente (4) und die zweiten fadenförmigen Elemente (6) mindestens durch das erste Harz (5) und das zweite Harz (7) miteinander verbunden sind, oder wobei der Dorn (10) entfernt wird, um im Umfangsabschnitt (3) einen leeren Bereich zu definieren, wobei der leere Bereich mit einer Vielzahl von ersten fadenförmigen Elementen (4) und einem ersten Harz (5) gefüllt ist, wobei die ersten fadenförmigen Elemente (4) sich überwiegend in der ersten Richtung (AA) erstrecken, wobei die ersten fadenförmigen Elemente (4) und die zweiten fadenförmigen Elemente (6) mindestens durch das erste Harz (5) und das zweite Harz (7) miteinander verbunden sind;
mindestens mehrere Schichten von der Vielzahl von Schichten außerdem ein Vlies (8) aufweisen, das aus einem Gewebe, einem gewebten Element, einem Band, einem Geflecht gewählt ist, wobei das Vlies (8) unter oder über den zweiten fadenförmigen Elementen (6) in der Vielzahl von Schichten angeordnet ist;
das Vlies (8) sich in der ersten Richtung (AA) von einem Ende zum anderen der Dentalvorform (1) erstreckt und sich auf allen Schichten erstreckt, wobei das Vlies (8) in einer Schnittebene senkrecht zur ersten Richtung (AA) die Form einer Spirale aufweist, mit einem Wechsel, in einer Richtung senkrecht zur ersten Richtung (AA) gesehen, zwischen einer Lage des Vlieses (8) und einer Lage des zweiten Fadenelements (6), und die vom zentralen Abschnitt (2) ausgehend bis zu einem Ende des Umfangsabschnitts (3) gerichtet ist.

8. Verfahren zur Herstellung einer Dentalvorform (1) nach Anspruch 7, wobei zwei aufeinanderfolgende Schichten sich das mindestens eine zweite fadenförmige Element (6) teilen, wobei die Windungen durch eine Wicklung mit Bienenwabenstruktur gebildet werden, und das mindestens eine zweite fadenförmige Element (6) sich bevorzugt kontinuierlich auf allen Schichten des Umfangsabschnitts (3) erstreckt.

9. Verfahren zur Herstellung einer Dentalvorform (1) nach einem der Ansprüche 7 und 8, wobei jede Schicht (6) außerdem ein Vlies (8) umfasst, das aus einem Gewebe oder einem gewebten Element gebildet ist, dessen Schussfaden oder Quasi-Schuss sich in der ersten Richtung (AA) erstreckt.

10. Verfahren zur Herstellung einer Dentalvorform (1) nach einem der Ansprüche 7 bis 9, umfassend mindestens ein Zuschneiden einer durch den zentralen Abschnitt (2) und den Umfangsabschnitt (3) gebildeten Einheit senkrecht zur ersten Richtung (AA), um die Abmessung der Dentalvorform (1) in der ersten Richtung (AA) zu definieren.

11. Verfahren zur Herstellung einer Zahnprothese (1), umfassend die folgenden Schritte:
- Bereitstellen einer Dentalvorform (1) nach einem der Ansprüche 1 bis 6;
- Bearbeiten der Dentalvorform (1), wobei ein Teil des Umfangsabschnitts (3) komplett entfernt wird, um den zentralen Abschnitt (2) zu erreichen, der dazu bestimmt ist eine Wurzelkanal-Verankerung zu bilden, und ein anderer Teil des Umfangsabschnitts (3) partiell entfernt wird, um einen Kronen-Abschnitt der Zahnprothese (1) in einer vordefinierten Form zu bilden.

12. Verfahren zur Herstellung einer Zahnprothese (1) nach dem vorherigen Anspruch, umfassend, vor dem Bearbeiten, ein Zuschneiden der Dentalvorform senkrecht zur ersten Richtung (AA), um die Abmessung der Dentalvorform in der ersten Richtung (AA) zu definieren.

## Claims

1. Dental preform (1) comprising:
- a central portion (2) formed by a plurality of first wire elements (4) and a first resin (5), the first wire elements (4) extending mostly in a first direction (AA), the first resin (5) mechanically bonding the first wire elements (4) to one another;
- a peripheral portion (3) in the form of a ring around the central portion (2) perpendicularly to the first direction (AA), the peripheral portion (3) comprising second wire elements (6) and a second resin (7), the second resin (7) mechanically bonding the second wire elements (6) to one another, the first wire elements (4) and the second wire elements (6) being mechanically bonded to one another at least by the first resin (5) and the second resin (7);
dental preform (1) wherein the peripheral portion (3) comprises a plurality of layers arranged on one another perpendicularly to the first direction (AA), the layers passing round the central portion (2);
wherein each layer has at least one turn formed by at least one of the second wire elements (6), the at least one second wire element (6) presenting a longitudinal direction that is offset with respect to the first direction (AA) by an angle comprised between 10° and 80° or between 100° and 170°;
wherein the second wire elements (6) of two consecutive layers present opposite orientations;
wherein the second wire elements (6) of each layer do not belong to a fabric or to a woven element;
wherein at least several layers of the plurality of layers further have a sheet (8) chosen from a fabric, a woven element, a strip or a braid, the sheet (8) being situated below or above the second wire-like elements (6) in said several layers; and wherein the sheet (8) extends from one end of the dental preform (1) to the other in the first direction (AA) and extends over all the layers, the sheet (8) being in the form of a spiral in a cutting plane perpendicular to the first direction (AA), with an alternation between a thickness of sheet (8) and a thickness of second wire element (6) in a direction of observation perpendicular to the first direction (AA) and directed from the central portion (2) up to one end of the peripheral portion (3).

2. Dental preform (1) according to claim 1 wherein the central portion (2); has wire elements that are majoritary in volume the first wire elements (4).

3. Dental preform (1) according to claim 2 wherein the central portion (2) only comprises the first wire elements (4) and the first resin (5).

4. Dental preform (1) according to one of claims 1 to 3, wherein the peripheral portion (3) has an increasing elastic modulus gradient when moving away from the central portion (2) perpendicularly to the first direction (AA);
wherein the peripheral portion (3) presents a content of second wire elements (6) that is increasing monotonously when moving away from the central portion (2) perpendicularly to the first direction (AA) to form the elastic modulus gradient; and/or wherein the second resin (7) is doped with particles and wherein the peripheral portion (3) presents a ratio of the content of the second wire element (6) over the particle content that is increasing in the radial direction when moving away from the central portion (2) perpendicularly to the first direction (AA) to form the elastic modulus gradient.

5. Dental preform (1) according to claim 4, wherein the second resin (7) is doped with particles and wherein the peripheral portion (3) has a ratio of the content of second wire element (6) to the particle content which is increasing in the radial direction away from the central portion (2) perpendicular to the first direction (AA) to form the elastic modulus gradient and wherein the ratio of the content of second wire element (6) to the particle content is increasing inversely proportional to the distance from the central portion (2) to form the elastic modulus gradient.

6. Dental preform (1) according to one of claims 1 to 5 wherein each layer comprises several second wire elements (6) coiled around the central portion (2).

7. Method for manufacturing a dental preform (1) comprising the following steps:
- providing a mandrel (10) extending in a first direction (AA);
- forming a peripheral portion (3) in the form of a ring around the mandrel (10) perpendicularly to the first direction (AA), the peripheral portion (3) having a plurality of layers passing round the mandrel (10), the layers being arranged around one another perpendicularly to the first direction (AA), each layer comprising at least one second wire element (6) and a second resin (7), the second resin (7) mechanically bonding the second wire elements (6) to one another in the peripheral portion (3);
method for manufacturing wherein the at least one second wire element (6) of each layer presents a longitudinal direction that is offset with respect to the first direction (AA) by an angle comprised between 10° and 80° or between 100° and 170°;
wherein the at least one second wire element (6) of two consecutive layers presents opposite orientations;
wherein the at least one second wire element (6) of each layer does not belong to a fabric or to a woven element;
wherein the mandrel (10) is a central portion (2) formed by a plurality of first wire elements (4) and a first resin (5), the first wire elements (4) extending mostly in the first direction (AA), the first resin (5) mechanically bonding the first wire elements (4) to one another, the first wire elements (4) and the second wire elements (6) being bonded to one another at least by the first resin (5) and the second resin (7), or wherein the mandrel (10) is removed to define an empty area in the peripheral portion (3), the empty area being filled by a plurality of first wire elements (4) and a first resin (5), the first wire elements (4) extending mostly in the first direction (AA), the first wire elements (4) and the second wire elements (6) being bonded to one another at least by the first resin (5) and the second resin (7);
wherein at least several layers of the plurality of layers further have a sheet (8) chosen from a fabric, a woven element, a strip or a braid, the sheet (8) being situated below or above the second wire elements (6) in said several layers; wherein the sheet (8) extends from one end of the dental preform (1) to the other in the first direction (AA) and extends over all the layers, the sheet (8) being in the form of a spiral in a cutting plane perpendicular to the first direction (AA), with an alternation between a thickness of sheet (8) and a thickness of second wire element (6) in a direction of observation perpendicular to the first direction (AA) and directed from the central portion (2) up to one end of the peripheral portion (3).

8. Method for manufacturing a dental preform (1) according to claim 7 wherein two successive layers share the at least one second wire element (6) and wherein the turns are formed by a honeycomb winding and preferentially the at least one second wire element (6) extends continuously over all the layers of the peripheral portion (3).

9. Method for manufacturing a dental preform (1) according to one of claims 7 to 8 wherein each layer (6) further comprises a sheet (8) formed by a fabric or a woven element the weft thread or quasi-weft thread of which extends in the first direction (AA).

10. Method for manufacturing a dental preform (1) according to one of claims 7 to 9 comprising at least cutting of an assembly formed by the central portion and the peripheral portion perpendicularly to the first direction (AA) to define the dimension of the dental preform (1) in the first direction (AA).

11. Method for manufacturing a dental prosthesis (1) comprising the following steps:
- providing a dental preform (1) according to any one of claims 1 to 6;
- milling of the dental preform (1) wherein a part of the peripheral portion (3) is completely eliminated to reach the central portion (2) designed to form a canal anchorage, and another part of the peripheral portion (3) is partially eliminated to form a crown portion of the dental prosthesis (1) according to a predefined shape.

12. Method for manufacturing a dental prosthesis (1) according to the preceding claim comprising, before milling is performed, cutting of the dental preform perpendicularly to the first direction (AA) to define the dimension of the dental preform in the first direction (AA).
